# EUROPÄISCHE PATENTSCHRIFT

(11) **EP 3 345 366 B1**
(45) Veröffentlichungstag und Bekanntmachung des Hinweises auf die Patenterteilung: **30.09.2020**
(21) Anmeldenummer: 16757865.7
(22) Anmeldetag: 25.08.2016
(51) Int. Cl.: H04L 29/06

(54) **VERFAHREN ZUM SICHEREN UND EFFIZIENTEN ZUGRIFF AUF VERBINDUNGSDATEN**
METHOD FOR SECURELY AND EFFICIENTLY ACCESSING CONNECTION DATA
PROCÉDÉ D'ACCÈS SÛR ET EFFICACE À DES DONNÉES DE CONNEXION

(30) Priorität: 31.08.2015 DE 102015114544
(43) Veröffentlichungstag der Anmeldung: 11.07.2018
(73) Patentinhaber: Uniscon universal identity control GmbH, 80339 München (DE)
(72) Erfinder: RIEKEN, Ralf, 80995 München (DE); KELLERMANN, Michael, 80331 München (DE); JÄGER, Hubert, 82049 Pullach (DE); ERNST, Edmund, 81373 München (DE)
(74) Vertreter: 2s-ip Schramm Schneider Bertagnoll Patent- und Rechtsanwälte Part mbB
(86) Internationale Anmeldenummer: PCT/EP2016/070053
(87) Internationale Veröffentlichungsnummer: WO 2017/036906

(56) Entgegenhaltungen:
- WO-A1-2013/088118
- WO-A1-2015/067809
- WO-A1-2015/121346
- "Lawful Interception (LI); Security framework in Lawful Interception and Retained Data environment", ETSI DRAFT; LI(10)0012_23LITD012_TR_102_661_V121, EUROPEAN TELECOMMUNICATIONS STANDARDS INSTITUTE (ETSI), 650, ROUTE DES LUCIOLES ; F-06921 SOPHIA-ANTIPOLIS ; FRANCE, Nr. V1.2.1, 8. März 2011 (2011-03-08), Seiten 1-46, XP014062822, [gefunden am 2011-03-08]
- "Lawful Interception (LI); Retained Data; Requirements of Law Enforcement Agencies for handling Retained Data;ETSI TS 102 656", ETSI DRAFT; ETSI TS 102 656, EUROPEAN TELECOMMUNICATIONS STANDARDS INSTITUTE (ETSI), 650, ROUTE DES LUCIOLES ; F-06921 SOPHIA-ANTIPOLIS ; FRANCE, Bd. LI - LI_am, Nr. V1.2.2, 24. September 2014 (2014-09-24), Seiten 1-17, XP014216587, [gefunden am 2014-09-24]

## Beschreibung

### Gebiet der Erfindung

Die Erfindung betrifft ein Verfahren zum sicheren und effizienten Zugriff auf Verbindungsdaten, die von einem Telekommunikationsanbieter erhoben werden oder bei einem Telekommunikationsanbieter anfallen.

### Hintergrund der Erfindung

Verbindungsdaten (auch Verkehrsdaten genannt) sind in der Telekommunikation die technischen Informationen, die bei der Nutzung eines Telekommunikationsdienstes (Telefonie, Internetnutzung) beim jeweiligen Telekommunikationsunternehmen bzw. Telekommunikationsanbieter anfallen und von diesem erhoben, gespeichert, verarbeitet, übermittelt oder genutzt werden, zum Beispiel die Rufnummer der beteiligten Anschlüsse sowie Zeit und Ort eines Gesprächs.

Bei der Aufklärung von Straftaten und/oder bei der Gefahrenabwehr sind Verbindungsdaten eines der Hilfsmittel für staatliche Behörden. Bei der so genannten Vorratsdatenspeicherung geht es darum, diese Daten ohne Anfangsverdacht zu speichern, damit diese Daten, sobald ein Verdacht bzw. ein juristisch berechtigtes Interesse zur Kenntnisnahme im Nachhinein vorliegt, gleichwohl zu Zwecken der Aufklärung verwendet werden können.

Bei der Vorratsdatenspeicherung besteht der Wunsch, dass ein Zugriff auf solche Verbindungsdaten ausschließlich autorisierten Instanzen (z.B. bestimmte staatliche Behörden) möglich sein soll. Ferner besteht der Wunsch, dass ein solcher Zugriff auch für die autorisierten Instanzen ausschließlich innerhalb sehr enger gesetzlicher Grenzen möglich sein soll.

Im Stand der Technik ist es bekannt, dass Telekommunikationsunternehmen bzw. Telekommunikationsanbieter solche Verbindungdaten speichern und den autorisierten Instanzen bei Bedarf Zugriff auf diese Daten gewähren. Zur Verbesserung der Sicherheit können die Verbindungdaten vom Telekommunikationsunternehmen verschlüsselt und beim Zugriff durch eine autorisierte Instanz von dem Telekommunikationsunternehmen entschlüsselt werden. Dies hat allerdings den Nachteil, dass das Telekommunikationsunternehmen sowohl im Besitz der Schlüssel für die Verschlüsselung als auch im Besitz der Schlüssel für die Entschlüsselung ist, sodass das Telekommunikationsunternehmen die Verbindungdaten jederzeit auch ohne einen konkreten Anlass entschlüsseln könnte. Zudem müssen bei jedem berechtigten Zugriff auf die Verbindungsdaten sämtliche verschlüsselten Verbindungsdaten entschlüsselt werden, um in den Verbindungsdaten nach Daten suchen zu können, die ein vorbestimmtes Kriterium erfüllen, was allerdings hinsichtlich der Performance zu höhen Einschränkungen führt. Ferner kann hierbei nicht gewährleistet werden, dass einerseits der autorisierten Instanz tatsächlich nur die gewünschten Daten zur Verfügung gestellt werden und dass andererseits unbefugte Mitarbeiter des Telekommunikationsunternehmens keinen Zugriff auf die Verbindungdaten haben. WO2013088118 beschäftigt sich mit dem Problem, einen sicheren Zugriff auf sensitive Daten bereitzustellen. Hierzu werden die von einem TK-Provider empfangenen Daten in einer gesicherten Datenbank gespeichert. Die empfangenen Daten können hierbei bereits in verschlüsselter Form empfangen werden. Den Schlüssel für das Verschlüsseln der Daten stellt der TK-Provider zur Verfügung. Derselbe Schlüssel wird auch verwendet um die verschlüsselten Daten zu entschlüsseln, d.h. der Schlüssel zum Entschlüsseln der Daten befindet sich weder ausschliesslich im der gesicherten Datenbank noch ausschliesslich beim TK-Provider. WO2015121346 beschäftigt sich mit dem Sichern von Datenbankrelationen vor einem unberechtigten Zugriff.

### Aufgabe der Erfindung

Aufgabe der vorliegenden Erfindung ist es daher, Lösungen bereitzustellen, die einerseits eine sichere Speicherung von Verbindungsdaten und andererseits eine effiziente Suche nach bestimmten Verbindungsdaten ermöglichen. Eine Aufgabe der Erfindung ist es zudem, einen unberechtigten Zugriff auf Verbindungsdaten effektiv zu verhindern.

### Erfindungsgemäße Lösung

Gelöst wird diese Aufgabe mit einem Verfahren zum sicheren und effizienten Zugriff auf Verbindungsdaten zumindest eines Telekommunikationsanbieters gemäß dem unabhängigen Anspruch. Vorteilhafte Ausgestaltungen und Weiterbildungen des Verfahrens sind in den abhängigen Ansprüchen angegeben.

Bereit gestellt wird demnach ein Verfahren zum sicheren und effizienten Zugriff auf Verbindungsdaten zumindest eines Telekommunikationsanbieters, wobei
- die Verbindungsdaten von dem Telekommunikationsanbieter erhoben werden und von dem Telekommunikationsanbieter verschlüsselt werden,
- die verschlüsselten Verbindungsdaten von dem Telekommunikationsanbieter in eine gesicherte Umgebung übertragen werden,
- in der gesicherten Umgebung die übertragenen verschlüsselten Verbindungsdaten entschlüsselt werden und für einen ersten vorbestimmten Zeitraum als entschlüsselte Verbindungsdaten ausschließlich in einem flüchtigen Speicher der gesicherten Umgebung gespeichert werden, und
- der Zugriff auf die Verbindungsdaten ausschließlich als Zugriff auf die in dem flüchtigen Speicher der gesicherten Umgebung gespeicherten entschlüsselten Verbindungsdaten über eine vorbestimmte Schnittstelle der gesicherten Umgebung gewährt wird.

Damit werden die entschlüsselten Verbindungsdaten dauerhaft und ausschließlich in dem flüchtigen Speicher (z.B. RAM) der gesicherten Umgebung gespeichert, was die Zugriffzeiten auf die Verbindungsdaten erheblich reduziert. Zudem können die entschlüsselten Verbindungsdaten besonders effizient gelöscht werden, wenn beispielsweise eine unberechtigter Zugriff auf die gesicherte Umgebung detektiert wird. Die Sicherheit der entschlüsselten Verbindungsdaten wird so erheblich erhöht.

Vorteilhaft ist es, wenn zumindest ein Verschlüsselungsschlüssel von einem Schlüsselautomaten in der gesicherten Umgebung erzeugt und zum Verschlüsseln der Verbindungsdaten an den Telekommunikationsanbieter übertragen wird.

Des Weiteren ist es vorteilhaft, wenn zum Entschlüsseln der übertragenen verschlüsselten Verbindungsdaten von dem Schlüsselautomaten in der gesicherten Umgebung zumindest ein Entschlüsselungsschlüssel erzeugt wird, wobei der Entschlüsselungsschlüssel ausschließlich in einem flüchtigen Speicher der gesicherten Umgebung gespeichert wird.

Dadurch ist gewährleistet, dass nur der Verschlüsselungsschlüssel die gesicherte Umgebung verlassen muss. Die Entschlüsselungsschlüssel verbleiben ausschließlich in der gesicherte Umgebung. Weil die Entschlüsselungsschlüssel ebenfalls ausschließlich in einem flüchtigen Speicher gespeichert werden, ist zudem gewährleistet, dass auch die Entschlüsselungsschlüssel bei einem Kompromittierungsversuch effizient gelöscht werden können.

Die Verbindungsdaten können blockweise verschlüsselt werden und blockweise verschlüsselt in die gesicherte Umgebung übertragen werden.

Die entschlüsselten Verbindungsdaten können eine Anzahl von Datensätzen aufweisen, wobei jeder Datensatz eine Anzahl von Datenfelder aufweist und wobei jeder Datensatz für den ersten vorbestimmten Zeitraum gespeichert wird. Jedem Datensatz kann ein entsprechender erster Zeitraum zugeordnet werden.

Jedes Datenfeld der Datensätze kann unabhängig von dem ersten vorbestimmten Zeitraum für einen zweiten vorbestimmten Zeitraum in dem flüchtigen Speicher der gesicherten Umgebung gespeichert wird. Jedem Datenfeld kann ein entsprechender zweiter Zeitraum zugeordnet werden.

Vorteilhaft ist es, wenn jeder Datensatz nach Ablauf des ersten vorbestimmten Zeitraums gelöscht wird und/oder wenn jedes Datenfeld nach Ablauf des zweiten vorbestimmten Zeitraums gelöscht wird. Damit ist gewährleistet, dass auch bei einem berechtigten Zugriff auf die Verbindungsdaten bereit abgelaufenen Verbindungsdaten oder bestimmte Details zu Verbindungsdaten nicht mehr gelesen werden können.

Die Verbindungsdaten können unmittelbar nachdem sie erhoben wurden verschlüsselt und in die gesicherte Umgebung übertragen werden.

Weiter vorteilhaft ist es, wenn die Verbindungsdaten nach dem Erzeugen der verschlüsselten Verbindungsdaten bei dem Telekommunikationsanbieter gelöscht werden. Damit liegen die Verbindungsdaten ausschließlich in der gesicherten Umgebung in unverschlüsselter Form vor.

Die entschlüsselten Verbindungsdaten können in der gesicherten Umgebung in einer In-Memory-Datenbank gespeichert werden.

Die gesicherte Umgebung kann in einer versiegelten Infrastruktur oder als versiegelte Infrastruktur ausgebildet sein. Der Entschlüsselungsschlüssel und der Verschlüsselungsschlüssel können kryptographische Schlüssel umfassen.

In einer Ausgestaltung der Erfindung können die verschlüsselten Verbindungsdaten auch bei dem Telekommunikationsanbieter gespeichert werden, wobei der Telekommunikationsanbieter vorzugsweise keinen Zugriff auf die für ein Entschlüsseln der Verbindungdaten notwendigen Entschlüsselungsschlüssel hat. Damit können die Verbindungsdaten beim Telekommunikationsanbieter "gesichert" werden, ohne dass der Telekommunikationsanbieter auf die Daten zugreifen kann.

Vorteilhaft ist es, wenn die in der gesicherten Umgebung gespeicherten entschlüsselten Verbindungsdaten und Entschlüsselungsschlüssel in zumindest eine weitere gesicherte Umgebung repliziert werden, wobei der Repliziervorgang vorzugsweise verschlüsselt durchgeführt wird.

Hierbei kann es von Vorteil sein, wenn
- der Repliziervorgang zu vorbestimmten Zeitpunkten abgewickelt wird, und/oder
- der Repliziervorgang bei einer Detektion eines unberechtigten Zugriffs auf die gesicherte Umgebung durchgeführt wird und nach Abschluss des Repliziervorganges die entschlüsselten Verbindungsdaten und Entschlüsselungsschlüssel in der gesicherten Umgebung gelöscht werden.

### Kurzbeschreibung der Figuren

Einzelheiten und Merkmale der Erfindung sowie konkrete Ausgestaltungen der Erfindung ergeben sich aus der nachfolgenden Beschreibung in Verbindung mit der Zeichnung. Es zeigt:
- Fig. 1: ein Beispiel eines Systems zur Verdeutlichung des erfindungsgemäßen Verfahrens; und
- Fig. 2: ein Beispiel mit mehreren gesicherten Umgebungen zur Verdeutlichung eines Replikationsmechanismus.

### Detaillierte Beschreibung der Erfindung

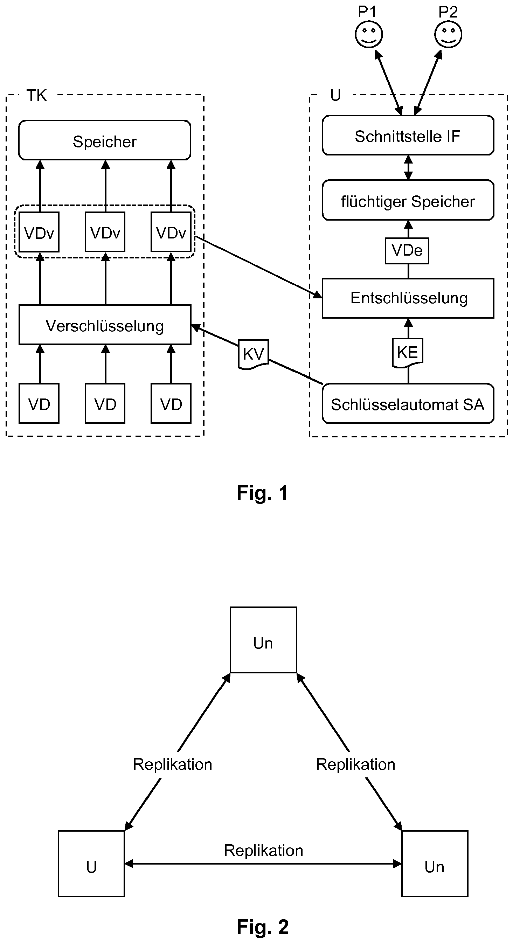

**Fig. 1** zeigt ein System, anhand dessen das erfindungsgemäße Verfahren näher erläutert wird.

Bei einem Telekommunikationsanbieter TK fallen eine Vielzahl von Verbindungsdaten VD an, die beim Telekommunikationsanbieter im Rahmen seiner zur Verfügung gestellten Telekommunikationsdienste entstehen bzw. von diesem für die Erfüllung seiner Leistungen benötigt werden. Das können beispielsweise Rufnummern der beteiligten Anschlüsse sowie Zeit, Dauer und Ort eines Gesprächs sein.

Einige oder alle der Verbindungsdaten VD müssen nun im Rahmen der Vorratsdatenspeicherung gespeichert werden, um autorisierten Instanzen, etwa Strafverfolgungsbehörden, über einen bestimmten Zeitraum Zugriff auf diese Verbindungsdaten VD gewähren zu können. Erfindungsgemäß ist es vorgesehen, dass diese Verbindungsdaten VD in einer gesicherten Umgebung U gespeichert werden. Die gesicherte Umgebung U kann bei dem jeweiligen Telekommunikationsanbieter TK implementiert sein. Alternativ kann die gesicherte Umgebung U auch bei einem externen Dienstleister implementiert sein und von diesem betrieben werden.

Die gesicherte Umgebung U ist vorzugsweise Bestandteil einer versiegelten Infrastruktur bzw. wird als versiegelte Infrastruktur betrieben. Die gesicherte Umgebung U kann eine Anzahl redundanter und verteilter Rechnerressourcen umfassen, welche jeweils eine Anzahl sogenannter Trusted Plattform Module (TPM), Leistungsschalter zur Unterbrechung der Stromversorgung der gesamten Rechnerressourcen, elektromechanische Schlösser, eine Anzahl von Sensoren, mit denen der Zugang zu den Rechnerressourcen überwacht werden kann, umfassen.

In einer Ausgestaltung der gesicherten Umgebung U können die Rechnerressourcen Speichereinrichtungen aufweisen, in denen kryptographische Schlüssel gespeichert werden, wobei in einer vorteilhaften Ausgestaltung der Erfindung die kryptographischen Schlüssel ausschließlich in flüchtigen Speichermedien gespeichert werden, sodass nach einer Unterbrechung der Stromversorgung die gespeicherten Schlüssel gelöscht werden. Das Löschen der kryptographischen Schlüssel kann etwa dann erforderlich sein, wenn sich jemand unbefugt Zutritt bzw. Zugang zu einer Rechnerressource verschafft. Die für die Verschlüsselung und Entschlüsselung der Verbindungsdaten notwendigen kryptographischen Schlüssel werden hier von einem Schlüsselautomaten SA, der in der gesicherten Umgebung U betrieben wird, erzeugt und verwaltet. Kryptographische Schlüssel zum Sichern der Datenverbindung zwischen der gesicherten Umgebung U und dem Telekommunikationsanbieter TK können ebenfalls von dem Schlüsselautomaten SA erzeugt und verwaltet werden.

Die Verbindungsdaten werden in der gesicherten Umgebung U ebenfalls in flüchtigen Speichermedien gespeichert.

Die Rechnerressourcen der gesicherten Umgebung U können mit einer sogenannten Versiegelungsüberwachungseinrichtung verbunden sein, welche die elektromechanischen Komponenten überwacht. Stellt die Versieglungsüberwachungseinrichtung einen unbefugten Zugang zu einer Rechnerressource fest, kann sie die Stromversorgung zu der kompromittierten Rechnerressource unterbrechen, wodurch die in den flüchtigen Speichermedien gespeicherten Schlüssel und Verbindungsdaten gelöscht werden. Damit ist gewährleistet, dass sich aus einer kompromittierten Rechnerressource weder Entschlüsselungsschlüssel noch Verbindungsdaten extrahieren lassen.

Der Zugriff auf die gesicherte Umgebung U erfolgt ausschließlich über eine Schnittstelle IF, die eine vorbestimmte Menge von Zugriffsfunktionen zur Verfügung stellt. Ferner kann in der Schnittstelle IF ein Berechtigungsmanagement implementiert sein, mit dem der Zugriff auf die Verbindungsdaten gesteuert und überwacht werden kann. Die Schnittstelle IF kann so angepasst sein, dass sie unberechtigte Zugriffe erkennt und gegebenenfalls die Unterbrechung der Stromversorgung initiieren kann.

Diese beim Telekommunikationsanbieter TK anfallenden Verbindungsdaten VD liegen zunächst in unverschlüsselter Form vor.

Die unverschlüsselten Verbindungdaten werden von dem Telekommunikationsanbieter TK verschlüsselt (Verschlüsselung). Das Verschlüsseln der Verbindungdaten kann in einer Verschlüsselungseinheit durchgeführt werden. Erfindungsgemäß ist es vorgesehen, dass der Verschlüsselungseinheit des Telekommunikationsanbieters TK die hierfür notwendigen Verschlüsselungsschlüssel KV von dem Schlüsselautomaten SA der gesicherten Umgebung zur Verfügung gestellt werden. Die Verschlüsselungsschlüssel KV werden zudem von dem Schlüsselautomaten SA der gesicherten Umgebung erzeugt. Des Weiteren erzeugt der Schlüsselautomaten SA auch die zum Verschlüsselungsschlüssel KV passenden Entschlüsselungsschlüssel KE, die für das Entschlüsseln der Verbindungdaten benötigt werden. Damit kann gewährleistet werden, dass nur der Verschlüsselungsschlüssel KV die gesicherte Umgebung U verlässt. Die Entschlüsselungsschlüssel KE müssen die gesicherte Umgebung U nicht verlassen, weil das Entschlüsseln der Verbindungsdaten erfindungsgemäß ausschließlich innerhalb der gesicherten Umgebung stattfindet.

Nach dem Verschlüsseln der Verbindungdaten VD werden die verschlüsselten Verbindungsdaten VDv von dem Telekommunikationsanbieter TK in die gesicherte Umgebung U übertragen. Der hierfür vorgesehene Übertragungsweg zwischen dem Telekommunikationsanbieter TK und der gesicherten Umgebung U kann ebenfalls kryptographisch gesichert werden, sodass während der Datenübertragung eine noch höhere Sicherheit gewährleistet ist, weil nicht nur die zu übertragenden Verbindungsdaten VDv verschlüsselt sind sondern auch der Übertragungsweg selbst.

Zusätzlich können die verschlüsselten Verbindungsdaten VDv bei dem Telekommunikationsanbieter TK in einem Speicher gespeichert werden. Der hierfür vorgesehene Speicher kann als flüchtiger und/oder nichtflüchtiger Speicher ausgestaltet sein. Das Speichern der verschlüsselten Verbindungsdaten VDv bei dem Telekommunikationsanbieter TK ist allerdings lediglich ein optionaler Schritt.

Das zusätzliche Speichern der verschlüsselten Verbindungsdaten VDv bei dem Telekommunikationsanbieter TK hat jedoch den Vorteil, dass bei einem Ausfall der gesicherten Umgebung U und weiterer redundanter gesicherter Umgebungen die Verbindungsdaten in der gesicherten Umgebung basierend auf den beim Telekommunikationsanbieter TK gespeicherten verschlüsselten Verbindungsdaten wieder hergestellt werden können, sofern die Leseschlüssel KE in der gesicherten Umgebung U nicht verloren gegangen sind.

Nachdem die verschlüsselten Verbindungsdaten VDv in die gesicherte Umgebung U übertragen wurden, werden sie in der gesicherten Umgebung U entschlüsselt. Das Entschlüsseln der verschlüsselten Verbindungsdaten VDv erfolgt vorteilhafter Weise in einer Entschlüsselungseinheit. Die hierfür notwendigen Entschlüsselungsschlüssel KE werden der Entschlüsselungseinheit von dem Schlüsselautomaten SA zur Verfügung gestellt.

Während dem Entschlüsselungsvorgang befinden sich die Daten ausschließlich in einem flüchtigen Speicher der gesicherten Umgebung U. Dadurch ist gewährleistet, dass bei einer Unterbrechung der Stromversorgung, etwa infolge eines Kompromittierungsversuches, keine unverschlüsselten Fragmente der zu entschlüsselnden Daten irgendwo auf nichtflüchtigen Speichereinrichtungen zurück bleiben.

Nachdem die verschlüsselten Verbindungsdaten VDv in der gesicherten Umgebung U entschlüsselt wurden, werden sie in unverschlüsselter Form (als entschlüsselte Verbindungsdaten VDe) ausschließlich in einem flüchtigen Speicher der gesicherten Umgebung U gespeichert. Dies bringt mehrere Vorteile mit sich: bei einem Kompromittierungsversuch werden die entschlüsselten Verbindungsdaten VDe aufgrund der eingeleiteten Stromunterbrechung unverzüglich gelöscht, sodass ein Angreifer nicht mehr an die Verbindungsdaten VDe gelangen kann; der (berechtigte) Zugriff auf die entschlüsselten Verbindungsdaten VDe kann erheblich schneller erfolgen, da Zeit für die Entschlüsselung entfällt und zudem keine teuren Lesezugriffe auf permanente Speichereinrichtungen (z.B. Festplatten) notwendig sind. Als flüchtiger Speicher kann der Arbeitsspeicher (RAM) einer Datenverarbeitungseinrichtung vorgesehen sein. Da bei der Vorratsdatenspeicherung sehr große Datenmengen anfallen können, ist es vorteilhaft, einen sehr großen flüchtigen Speicher vorzusehen, beispielsweise mehrere Terabyte Arbeitsspeicher.

Vorteilhaft ist es, wenn die entschlüsselten Verbindungsdaten VDe in einer In-Memory-Datenbank gespeichert werden, bei der sowohl die Datenhaltung als auch die Datenverarbeitung innerhalb des flüchtigen Speichers erfolgt. Die Verwendung von In-Memory-Datenbanken hat den Vorteil, dass die von diesen zur Verfügung gestellte Funktionalität genutzt werden kann. So können für die in der In-Memory-Datenbank entschlüsselten Verbindungsdaten VDe Indizes erzeugt werden, um den selektiven Zugriff auf die entschlüsselten Verbindungsdaten VDe noch weiter zu beschleunigen. Zudem können die entschlüsselten Verbindungsdaten VDe nach bestimmten Kriterien partitioniert werden, sodass bei bestimmten Anfragen nur auf einen Teil der entschlüsselten Verbindungsdaten VDe zugegriffen werden muss.

In einer Ausgestaltung der Erfindung ist es vorgesehen, verschlüsselte Verbindungsdaten VDv immer dann von dem Telekommunikationsanbieter TK in die gesicherte Umgebung U zu übertragen, wenn solche bei dem Telekommunikationsanbieter TK anfallen. Damit ist gewährleistet, dass in der gesicherten Umgebung U immer der aktuellste Stand der Verbindungsdaten gespeichert ist. Alternativ können die verschlüsselten Verbindungsdaten VDv jeweils zu festen Zeitpunkten oder in festen Zeitintervallen von dem Telekommunikationsanbieter TK in die gesicherte Umgebung U übertragen werden.

In einer weiteren Ausgestaltung ist es vorgesehen die Verbindungsdaten in verschlüsselter Form und blockweise von dem Telekommunikationsanbieter TK in die gesicherte Umgebung U zu übertragen. Die Verbindungsdaten können dabei zu Blöcken zusammengefasst werden und die Blöcke anschließend verschlüsselt werden. Alternativ können bereits verschlüsselte Verbindungsdaten zu Blöcken zusammengefasst werden. In der Entschlüsselungseinheit der gesicherten Umgebung U werden diese Blöcke dann in entsprechender Weise zerlegt und wie vorstehend erläutert entschlüsselt und gespeichert.

Über die Schnittstelle IF erhalten autorisierte Instanzen P1, P2, etwa Strafverfolgungsbehörden, Zugriff auf die in dem flüchtigen Speicher der gesicherten Umgebung U gespeicherten entschlüsselten Verbindungsdaten VDe. Die Schnittstelle IF überprüft hierbei, ob und in welcher Form die autorisierte Instanz auf die Daten zugreifen darf.

Damit die autorisierte Instanz zum Zeitpunkt des Zugriffes nur im Rahmen der gesetzlichen Möglichkeit auf die in der gesicherten Umgebung U gespeicherten Verbindungsdaten zugreifen kann ist es vorgesehen, Verbindungsdaten mit einem sogenannten Ablaufdatum zu versehen. Das Ablaufdatum kann eine maximale Speicherdauer (z.B. zehn Wochen) der Verbindungsdaten oder ein festes Datum (z.B. 15.12.2015) umfassen.

Die entschlüsselten Verbindungsdaten VDe selbst werden in dem flüchtigen Speicher als Datensätze gespeichert, wobei jeder Datensatz eine Anzahl von Datenfelder aufweisen kann. Jedem Datensatz wird ein erstes Ablaufdatum zugeordnet. Nach Erreichen des ersten Ablaufdatums wird der entsprechende Datensatz automatisch vollständig aus dem flüchtigen Speicher gelöscht. Damit ist gewährleistet, dass selbst die autorisierten Instanzen auf solche "abgelaufenen" Daten nicht mehr zugreifen können. Das automatische Löschen der "abgelaufenen" Daten kann zyklisch erfolgen, etwa jeden Tag um 12:00 Uhr und um 24:00 Uhr.

Ferner ist es vorgesehen, dass auch einzelnen Datenfeldern eines Datensatzes ein zweites Ablaufdatum zugeordnet wird. Es kann entweder jedem Datenfeld ein absolutes Ablaufdatum oder ein relatives Ablaufdatum, das anhand des ersten Ablaufdatums ermittelt wird, zugeordnet werden. Nach dem Erreichen des zweiten Ablaufdatums werden die entsprechenden Datenfelder des Datensatzes automatisch vollständig aus dem flüchtigen Speicher gelöscht. Damit ist gewährleistet, dass die autorisierten Instanzen lediglich noch auf nicht abgelaufene Datenfelder eines Datensatzes zugreifen können.

Insgesamt ist damit gewährleistet, dass zum Zeitpunkt einer Anfrage nur die gesetzlich erlaubten Daten gelesen werden können.

Das erfindungsgemäße Verfahren, bei dem die Verbindungdaten in unverschlüsselter Form ausschließlich in einem flüchtigen Speicher einer gesicherten Umgebung U gespeichert werden und bei dem das Verschlüsseln, die Datenübertragung und das Entschlüsseln wie vorstehend beschrieben abgewickelt wird, bringt neben den vorstehend genannten Vorteilen jedenfalls noch folgende Vorteile mit sich:
- Die Antwortzeiten für eine Anfrage (Abfrage von Verbindungsdaten in der gesicherten Umgebung U) sinken deutlich. Die Antwortzeiten ohne das erfindungsgemäße Verfahren ergeben sich aus:
   (Transferzeit für alle Datenblöcke) + (Entschlüsselung aller Datenblöcke) + (Suche in den entschlüsselten Daten).
   Durch die Speicherung der entschlüsselten Verbindungsdaten im RAM (flüchtigen Speicher) entfällt die Zeit für die Entschlüsselung. Die Transferzeit entfällt ebenso fast vollständig.
- Die Verkehrslast durch den Transfer der Datenblöcke vom Telekommunikationsanbieter TK in die gesicherte Umgebung U sinkt deutlich. Nur im Störungsfall, etwa bei einem Stromausfall oder bei einer gewollten Stromunterbrechung, ist der Transfer der gesamten Datenmenge von dem Telekommunikationsanbieter TK in die gesicherte Umgebung U erforderlich (sofern die in der gesicherten Umgebung U gespeicherten Daten nicht repliziert wurden). Im Normalfall werden die beim Telekommunikationsanbieter TK neu erzeugten Datenblöcke kontinuierlich in die gesicherte Umgebung U übertragen.
- Jeder Datenblock, der vom Telekommunikationsanbieter TK in die gesicherte Umgebung U übertragen wurde, wird sofort nach Ende des Transfers entschlüsselt. Damit entfällt bei der Ausführung einer Anfrage die Zeit für die Entschlüsselung.
- Die entschlüsselten Daten VDe werden für mehrere Anfragen im flüchtigen Speicher bereitgehalten. Daher lohnt sich beim Einlesen der zusätzliche Aufwand für den Aufbau einer Struktur, die Abfragen effizienter ausführen lässt, etwa das Ablegen der Daten in einer In-Memory-Datenbank. Durch das Erzeugen von Indizes auf den Daten wird die Suche beschleunigt.

**Fig. 2** zeigt ein Beispiel zum Sichern der in einer gesicherten Umgebung U gespeicherten Daten. Weil es erfindungsgemäß vorgesehen ist, dass die Verbindungsdaten in entschlüsselter Form ausschließlich in einem flüchtigen Speicher einer gesicherten Umgebung U gespeichert werden darf eine Kopie dieser Verbindungsdaten zum Zwecke einer Sicherung ebenfalls nur ausschließlich in einem flüchtigen Speicher gespeichert werden.

Um auch für die Kopie dieser Verbindungsdaten dieselben Sicherheitsanforderungen zu gewährleisten, ist es erfindungsgemäß vorgesehen, dass die Daten in eine oder mehrere weitere gesicherte Umgebungen Un repliziert werden. Jedenfalls die Sicherheitsmerkmale dieser weiteren gesicherten Umgebungen Un entsprechen mindestens jenen der gesicherten Umgebung U.

Diese weiteren gesicherten Umgebungen Un können ebenfalls eine Schnittstelle IF aufweisen. Damit kann eine weitere gesicherte Umgebung Un für Abfragen bereitgestellt werden, wenn die gesicherte Umgebung U, etwa bei Wartungsarbeiten, nicht zur Verfügung steht. Die eine weitere gesicherte Umgebung Un ausschließlich zur Datensicherung kann auf die Schnittstelle IF verzichtet werden.

Der Datenaustausch zwischen den gesicherten Umgebungen U und Un kann über kryptographisch gesicherte Kommunikationskanäle abgewickelt werden.

Bei einem Ausfall einer gesicherten Umgebung U oder Un (etwa wenn die Stromversorgung unterbrochen wurde) können die Daten aus einer der übrigen gesicherten Umgebungen wieder hergestellt werden. Alternativ können die Daten auch aus den verschlüsselten Originaldaten VDv des Telekommunikationsanbieters TK wieder hergestellt werden, sofern der Telekommunikationsanbieter TK diese permanent speichert und die Entschlüsselungsschlüssel KE nicht verloren gingen.

### Bezugszeichen:

- IF: Schnittstelle
- KE: Entschlüsselungsschlüssel
- KV: Verschlüsselungsschlüssel
- P1, P2: Zugriffs- bzw. abfrageberechtige Person
- S: flüchtiger Speicher (z.B. RAM)
- SA: Schlüsselautomat
- tl: erster vorbestimmter Zeitraum (Speicherdauer für einen Datensatz)
- t2: zweiter vorbestimmter Zeitraum (Speicherdauer für ein Datenfeld)
- TK: Telekommunikationsanbieter
- U: gesicherte Umgebung (versiegelte Infrastruktur)
- Un: weitere gesicherte Umgebung(en)
- VD: Verbindungsdaten (unverschlüsselt)
- VDe: Verbindungsdaten (entschlüsselt)
- VDv: Verbindungsdaten (verschlüsselt)

## Patentansprüche

1. Verfahren zum sicheren und effizienten Zugriff auf Verbindungsdaten zumindest eines Telekommunikationsanbieters (TK), wobei
- die Verbindungsdaten (VD) von dem Telekommunikationsanbieter erhoben werden und von dem Telekommunikationsanbieter verschlüsselt werden,
- die verschlüsselten Verbindungsdaten (VDv) von dem Telekommunikationsanbieter (TK) in eine gesicherte Umgebung (U) übertragen werden,
- in der gesicherten Umgebung (U) die übertragenen verschlüsselten Verbindungsdaten (VDv) entschlüsselt werden und für einen ersten vorbestimmten Zeitraum (t1) als entschlüsselte Verbindungsdaten (VDe) ausschließlich in einem flüchtigen Speicher (S) der gesicherten Umgebung (U) gespeichert werden,
- der Zugriff auf die Verbindungsdaten ausschließlich als Zugriff auf die in dem flüchtigen Speicher (S) der gesicherten Umgebung (U) gespeicherten entschlüsselten Verbindungsdaten (VDe) über eine vorbestimmte Schnittstelle (IF) der gesicherten Umgebung (U) gewährt wird,
- zumindest ein Verschlüsselungsschlüssel (KV) von einem Schlüsselautomaten (SA) in der gesicherten Umgebung (U) erzeugt und zum Verschlüsseln der Verbindungsdaten (VD) an den Telekommunikationsanbieter (TK) übertragen wird,
- zum Entschlüsseln der übertragenen verschlüsselten Verbindungsdaten (VDv) von dem Schlüsselautomaten (SA) in der gesicherten Umgebung (U) zumindest ein Entschlüsselungsschlüssel (KE) erzeugt wird, wobei der Entschlüsselungsschlüssel (KE) ausschließlich in einem flüchtigen Speicher (S) der gesicherten Umgebung (U) gespeichert wird, und
- die Verbindungsdaten (VD) nach dem Erzeugen der verschlüsselten Verbindungsdaten (VDv) bei dem Telekommunikationsanbieter gelöscht werden.

2. Verfahren nach einem der vorhergehenden Ansprüche, wobei die Verbindungsdaten (VD) blockweise verschlüsselt werden und blockweise verschlüsselt in die gesicherte Umgebung (U) übertragen werden.

3. Verfahren nach einem der vorhergehenden Ansprüche, wobei die entschlüsselten Verbindungsdaten (VDe) eine Anzahl Datensätze aufweisen, wobei jeder Datensatz eine Anzahl von Datenfelder aufweist, wobei jeder Datensatz für den ersten vorbestimmten Zeitraum (t) gespeichert wird.

4. Verfahren nach dem vorhergehenden Anspruch, wobei jedes Datenfeld der Datensätze unabhängig von dem ersten vorbestimmten Zeitraum (t) für einen zweiten vorbestimmten Zeitraum (t2) in dem flüchtigen Speicher (S) der gesicherten Umgebung (U) gespeichert wird.

5. Verfahren nach einem der vorhergehenden Ansprüche, wobei jeder Datensatz nach Ablauf des ersten vorbestimmten Zeitraums (t) gelöscht wird und/oder wobei jedes Datenfeld nach Ablauf des zweiten vorbestimmten Zeitraums (t2) gelöscht wird.

6. Verfahren nach einem der vorhergehenden Ansprüche, wobei die Verbindungsdaten (VD) unmittelbar nachdem sie erhoben wurden verschlüsselt und in die gesicherte Umgebung (U) übertragen werden.

7. Verfahren nach einem der vorhergehenden Ansprüche, wobei die entschlüsselten Verbindungsdaten (VDe) in einer In-Memory-Datenbank gespeichert werden.

8. Verfahren nach einem der vorhergehenden Ansprüche, wobei die gesicherte Umgebung (U) in einer versiegelten Infrastruktur ausgebildet ist und/oder wobei der Entschlüsselungsschlüssel (KE) und der Verschlüsselungsschlüssel (KV) kryptographische Schlüssel umfassen.

9. Verfahren nach einem der vorhergehenden Ansprüche, wobei die verschlüsselten Verbindungsdaten (VDv) bei dem Telekommunikationsanbieter (TK) gespeichert werden.

10. Verfahren nach einem der vorhergehenden Ansprüche, wobei die in der gesicherten Umgebung (U) gespeicherten entschlüsselten Verbindungsdaten (VDe) und Entschlüsselungsschlüssel (KE) in zumindest eine weitere gesicherte Umgebung (Un) repliziert werden, wobei der Repliziervorgang vorzugsweise verschlüsselt durchgeführt wird.

11. Verfahren nach dem vorhergehenden Anspruch, wobei
- der Repliziervorgang zu vorbestimmten Zeitpunkten abgewickelt wird, und/oder
- der Repliziervorgang bei einer Detektion eines unberechtigten Zugriffs auf die gesicherte Umgebung (U) durchgeführt wird und nach Abschluss des Repliziervorganges die entschlüsselten Verbindungsdaten (VDe) und Entschlüsselungsschlüssel (KE) in der gesicherten Umgebung (U) gelöscht werden.

## Claims

1. Method for secure and efficient access to connection data of at least one telecommunications provider (TK), wherein
- the connection data (VD) are collected by the telecommunications provider and encrypted by the telecommunications provider,
- the encrypted connection data (VDv) are transmitted to a secured environment (U) by the telecommunications provider (TK),
- the transmitted encrypted connection data (VDv) are decrypted in the secured environment (U) and are stored exclusively in a volatile memory (S) of the secured environment (U) as decrypted connection data (VDe) for a first predetermined time period (t1),
- access to the connection data is granted exclusively via a predetermined interface (IF) of the secured environment (U) as access to the decrypted connection data (VDe) stored in the volatile memory (S) of the secured environment (U),
- at least one encryption key (KV) is generated by an automatic key generator (SA) in the secured environment (U) and is transmitted to the telecommunications provider (TK) for encrypting the connection data (VD),
- in order to decrypt the transmitted encrypted connection data (VDv), at least one decryption key (KE) is generated by the automatic key generator (SA) in the secured environment (U), wherein the decryption key (KE) is stored exclusively in a volatile memory (S) of the secured environment (U), and
- the connection data (VD) are deleted at the telecommunications provider after the encrypted connection data (VDv) have been generated.

2. Method according to the preceding claim, wherein the connection data (VD) are encrypted in blocks and transmitted to the secured environment (U) in encrypted form in blocks.

3. Method according to either of the preceding claims, wherein the decrypted connection data (VDe) have a number of data sets, wherein each data set has a number of data fields, wherein each data set is stored for the first predetermined time period (t).

4. Method according to the preceding claim, wherein, independently of the first predetermined time period (t), each data field of the data sets is stored in the volatile memory (S) of the secured environment (U) for a second predetermined time period (t2).

5. Method according to any of the preceding claims, wherein each data set is deleted after the first predetermined time period (t) has ended and/or wherein each data field is deleted after the second predetermined time period (t2) has ended.

6. Method according to any of the preceding claims, wherein the connection data (VD) are encrypted and transmitted to the secured environment (U) immediately after they have been collected.

7. Method according to any of the preceding claims, wherein the decrypted connection data (VDe) are stored in an in-memory database.

8. Method according to any of the preceding claims, wherein the secured environment (U) is formed in a sealed infrastructure and/or wherein the decryption key (KE) and the encryption key (KV) comprise cryptographic keys.

9. Method according to any of the preceding claims, wherein the encrypted connection data (VDv) are stored at the telecommunications provider (TK).

10. Method according to any of the preceding claims, wherein the decrypted connection data (VDe) and decryption key (KE) stored in the secured environment (U) are replicated in at least one additional secured environment (Un), wherein the replication process is preferably carried out in encrypted form.

11. Method according to the preceding claim, wherein
- the replication process is carried out at predetermined time points, and/or
- the replication process is carried out when unauthorized access to the secured environment (U) is detected and, after the replication process has been completed, the decrypted connection data (VDe) and decryption key (KE) are deleted in the secured environment (U).

## Revendications

1. Procédé d'accès sûr et efficace à des données de connexion d'au moins un opérateur de télécommunications (TK),
- les données de connexion (VD) étant rassemblées par l'opérateur de télécommunications et étant cryptées par l'opérateur de télécommunications,
- les données de connexion cryptées (VDv) étant transmises dans un environnement sécurisé (U) par l'opérateur de télécommunications (TK),
- les données de connexion cryptées transmises (VDv) étant décryptées dans l'environnement sécurisé (U) et étant mémorisées pour une première période prédéfinie (t1) en tant que données de connexion décryptées (VDe) exclusivement dans une mémoire volatile (S) de l'environnement sécurisé (U),
- l'accès aux données de connexion étant accordé exclusivement en tant qu'accès aux données de connexion décryptées (VDe) mémorisées dans la mémoire volatile (S) de l'environnement sécurisé (U) par le biais d'une interface prédéfinie (IF) de l'environnement sécurisé (U),
- au moins une clé de cryptage (KV) étant générée par un automate à clé (SA) dans l'environnement sécurisé (U) et étant transmise à l'opérateur de télécommunications (TK) pour crypter les données de connexion (VD),
- au moins une clé de décryptage (KE) étant générée par l'automate à clé (SA) dans l'environnement sécurisé (U) pour décrypter les données de connexion cryptées transmises (VDv), la clé de décryptage (KE) étant mémorisée exclusivement dans une mémoire volatile (S) de l'environnement sécurisé (U), et
- les données de connexion (VD) étant supprimées chez l'opérateur de télécommunications après la génération des données de connexion cryptées (VDv).

2. Procédé selon l'une des revendications précédentes, dans lequel les données de connexion (VD) sont cryptées par blocs et transmises par blocs sous forme cryptée dans l'environnement sécurisé (U).

3. Procédé selon l'une des revendications précédentes, dans lequel les données de connexion décryptées (VDe) présentent un certain nombre d'ensembles de données, chaque ensemble de données présentant un certain nombre de champs de données, chaque ensemble de données étant mémorisé pour la première période prédéfinie (t).

4. Procédé selon la revendication précédente, dans lequel chaque champ de données des ensembles de données est mémorisé dans la mémoire volatile (S) de l'environnement sécurisé (U) pour une seconde période prédéfinie (t2), indépendamment de la première période prédéfinie (t).

5. Procédé selon l'une des revendications précédentes, dans lequel chaque ensemble de données est supprimé après la fin de la première période prédéfinie (t) et/ou chaque champ de données est supprimé après la fin de la seconde période prédéfinie (t2).

6. Procédé selon l'une des revendications précédentes, dans lequel les données de connexion (VD) sont cryptées immédiatement après avoir été rassemblées et sont transmises dans l'environnement sécurisé (U).

7. Procédé selon l'une des revendications précédentes, dans lequel les données de connexion décryptées (VDe) sont mémorisées dans une base de données en mémoire.

8. Procédé selon l'une des revendications précédentes, dans lequel l'environnement sécurisé (U) est conçu dans une infrastructure scellée et/ou la clé de décryptage (KE) et la clé de cryptage (KV) comprennent des clés cryptographiques.

9. Procédé selon l'une des revendications précédentes, dans lequel les données de connexion cryptées (VDv) sont mémorisées chez l'opérateur de télécommunications (TK).

10. Procédé selon l'une des revendications précédentes, dans lequel les données de connexion décryptées (VDe) et la clé de décryptage (KE) mémorisées dans l'environnement sécurisé (U) sont répliquées dans au moins un autre environnement sécurisé (Un), le processus de réplication étant effectué de préférence sous forme cryptée.

11. Procédé selon la revendication précédente, dans lequel
- le processus de réplication est réalisé à des moments prédéfinis, et/ou
- le processus de réplication est effectué lorsqu'un accès non autorisé à l'environnement sécurisé (U) est détecté, et une fois le processus de réplication terminé, les données de connexion décryptées (VDe) et la clé de décryptage (KE) sont supprimées dans l'environnement sécurisé (U).
